Europäisches Patentamt

(19) **European Patent Office**

Office européen des brevets

(11) Publication number: **0 172 752**
**B1**

(12) **EUROPEAN PATENT SPECIFICATION**

(45) Date of publication of patent specification: **02.11.88**　(51) Int. Cl.[4]: **A 21 C 3/02**

(21) Application number: **85305944.2**

(22) Date of filing: **21.08.85**

(54) Apparatus for stretching a plastic raw material.

(30) Priority: **21.08.84 JP 172416/84**

(43) Date of publication of application:
**26.02.86 Bulletin 86/09**

(45) Publication of the grant of the patent:
**02.11.88 Bulletin 88/44**

(84) Designated Contracting States:
**AT BE CH DE FR GB IT LI NL SE**

(56) References cited:
**US-A-3 191 553**
**US-A-3 894 828**
**US-A-4 113 412**

(73) Proprietor: **RHEON AUTOMATIC MACHINERY CO. LTD.**
**2-3, Nozawa-machi**
**Utsunomiya-shi Tochigi-ken (JP)**

(72) Inventor: **Hayashi, Torahiko**
**3-4, Nozawa-machi**
**Utsunomiya-shi Tochigi-ken (JP)**

(74) Representative: **Leale, Robin George et al**
**FRANK B. DEHN & CO. Imperial House 15-19 Kingsway**
**London WC2B 6UZ (GB)**

Courier Press, Leamington Spa, England.

## Description

This invention relates to apparatus for stretching a plastic raw material, particularly but not exclusively for stretching plastic dough having viscoelasticity, such as bread dough or confectionery dough.

One form or prior art apparatus which is frequently employed to stretch dough such as bread dough or confectionery dough, is disclosed in U.S. Patent No. 3,973,895. In this apparatus a plurality of conveyors are arranged in series and driven at progressively higher speeds, and a plurality of rollers, rotatable about their axes and movable around an endless roller path, are disposed above the conveyors. However, in this prior art apparatus, the movement of the said rollers is achieved by a complex drive mechanism. For example, a pair of chains is mounted to shafts of the rollers, at both ends thereof, to connect the rollers along the endless roller path. As the rollers are freely rotatably mounted to their respective shafts the rollers can rotate about their axes, and at the same time are moved along the endless roller path by the said chains. Accordingly, this prior art apparatus requires both a transmission mechanism to rotate the rollers and a driving device to cause the chains to progress, and a large space is required for these devices.

Viewed from one aspect the present invention provides apparatus for stretching a plastic raw material, comprising a plurality of serially arranged conveyors and a plurality of rollers, movable around an endless roller path, positioned above the said conveyors, characterized in that shafts of the said rollers are provided with movers of a linear motor, and that a ring-form stator of the linear motor extends, spaced apart by a predetermined distance from the said movers, along the said endless roller path.

Viewed from another aspect the present invention provides apparatus for stretching a plastic raw material, comprising a plurality of serially arranged conveyors and a plurality of rollers, movable around an endless roller path, positioned above the said conveyors, characterized in that a shaft of at least one of the rollers is provided with a mover of a linear motor, a ring-form stator of the linear motor extends, spaced apart by a predetermined distance from the mover, along the endless roller path, and connecting means are provided which link the shafts of the rollers with each other in series.

Viewed from a further aspect the present invention provides an apparatus for stretching a plastic raw material, comprising a plurality of serially arranged conveyors and a plurality of rollers, movable around an endless roller path, positioned above the said conveyors, characterized in that at least one of the rollers is provided with a built-in motor to cause the roller to rotate about its axis and thereby progress along the endless roller path, and connecting means are provided which link the shafts of the rollers with each other in series.

Thus a preferred embodiment of the present invention comprises serially arranged conveyors and a plurality of rollers adapted to rotate about their axes and to be progressed along an endless roller path by means of a linear motor or a motor mounted in one or more of the rollers. An upstream conveyor receives a plastic raw material and conveys it to a downstream conveyor. Above these conveyors are positioned the said rollers arranged in their endless roller path, which may be an oval path having a straight bottom run spaced above the conveyors by a predetermined distance. The distance between an upstream one of the conveyors and the said roller path may be greater than the distance between a downstream conveyor and the said path. The rollers are freely rotatable about their shafts and are arranged to progress along the roller path at a speed higher than that of any of the conveyors, which are run in such a speed relationship that an upstream conveyor is always slower than a downstream conveyor. The plastic raw material fed on the conveyors is stretched by the co-action between the rollers and the conveyors.

The driving force for the rollers may be provided by a linear motor, or by a built-in motor mounted in a hollow portion within one or more of the rollers. When a linear motor is used, each roller or at least one roller is provided with a mover, forming a portion of the linear motor, fixed to a shaft about which the roller is rotatable. The other portion of the linear motor, i.e., the stator, extends along the endless roller path. The mover is also called a reaction plate when the linear motor is a linear induction motor. Further, various other types of linear motor can be used in the context of the present invention by using a primary member and a secondary member of the linear motor either as a stator or a rotor, respectively. When a built-in motor is utilized, rollers equipped with the built-in motors rotate about their axes, while the rotation of the shafts about their axes is substantially precluded. Thus complex driving mechanisms which have hitherto been employed are not required, and a simple and reliable arrangement of the apparatus can be achieved, which enables the speed control required for stretching to be carried out without difficulty.

To secure the progression of the rollers around the endless roller path, any suitable means may be employed. If only one roller is equipped with a mover, it is necessary to connect the rollers by means of link arms.

Some embodiments of the invention will now be described by way of example and with reference to the. accompanying drawings, in which:—

Figure 1 is a diagrammatic side elevation view showing a stretching apparatus composed of two conveyors and a plurality of rollers, according to the present invention;

Figure 2 is a cross-sectional view of the rollers when driven by a linear induction motor, according to a first embodiment of the present invention;

Figure 3 is a side elevation view showing the rollers of the said first embodiment, each roller carrying a mover of the linear induction motor;

Figure 4 is a side elevation view showing the rollers interconnected by link arms, in a second embodiment of the invention;

Figure 5 is a cross-sectional view of the rollers when one is provided with a built-in motor, in a third embodiment of the invention; and

Figure 6 is a side elevation view showing the rollers interconnected by link arms, in the said third embodiment, with a distributor removed for the sake of clarity.

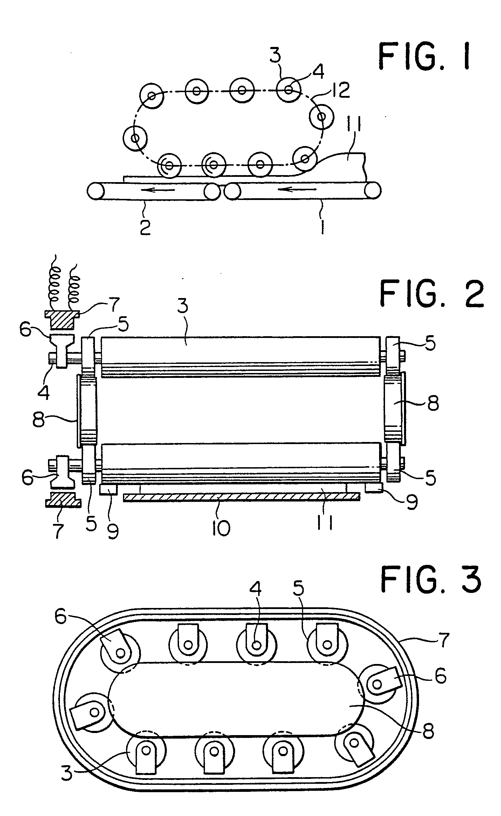

The structure of the first embodiment of the invention will first be described with reference to Figure 1 to 3. Figure 1 shows a stretching apparatus comprising two conveyors 1 and 2 and a plurality of rollers 3. A plastic raw material 11, for instance dough, is fed on the conveyor in the direction of the arrows. The conveyors may be belt-conveyors and are arranged in series. The downstream conveyor is run at a faster speed than the upstream conveyor. The rollers 3 are arranged to run along an oval path, in the clockwise direction as seen in Figure 1, at a substantially higher speed than either of the conveyors. When the roller are in the bottom run of their oval path, they are spaced above the conveyors so as to allow the passage of the dough. When the dough is fed into the space between the rollers and the conveyors, the rollers are made to rotate about their shafts in the counter-clockwise direction as seen in Figure 1, while they advance at a speed substantially greater than the progress of the dough, thereby stretching the dough.

Referring now to Figures 2 and 3, the rollers 3 are freely rotatably mounted on shafts 4. Bearings 5, each in the form of a wheel of a diameter larger than the shaft 4, are mounted to the shafts adjacent both ends of each roller 3. A pair of oval-shaped guides 8 are disposed inside the endless roller path 12 to act as a travel guide for the movement of the bearings 5. The guides 8 are in turn mounted to the frame of the apparatus.

A reaction plate 6 of a linear induction motor is fixed to one end of each of the shafts 4, and a stator 7 extends in endless fashion, along a line parallel to the endless roller path, at a predetermined space from the reaction plates 6. The reaction plates 6 and the stator 7 act in combination as a linear induction motor, the stator 7 forming the primary member thereof. The bearing 5 at the other end of each roller 3 is received in a space between the guide 8 and the frame (not shown) so that the rollers are retained in position. Rails 9 are disposed underneath and at both ends of the rollers along the bottom run of the endless roller path 12 and are in contact with the surfaces of the rollers. Since each roller is provided with a reaction plate 6, it can move independently of but in unison with the other rollers around the guides 8 when an electric current is supplied to the stator 7, whilst when the rollers come into contact with the rails 9 they are also rotated around their axes by frictional engagement with the rails.

In operation, dough 11 is fed into the apparatus between a conveyor belt 10 of the conveyor 1 and the rollers 3, in the bottom run of the endless roller path 12. The conveyors 1, 2 are driven such that the downstream conveyor 2 moves faster than the upstream conveyor 1. The rollers 3 progress at a speed higher than either of the conveyors 1, 2, while rotating about their axes. The rotation and the progression of the rollers are caused by the linear inductive action between the reaction plates 6 in the rollers and the ring-form stator 7.

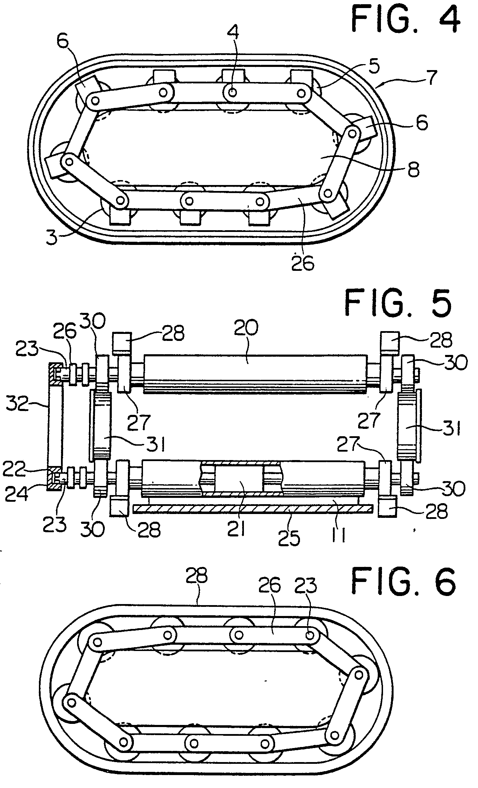

A second embodiment of the invention is shown in Figure 4 in which each pair of adjacent rollers 20 are interconnected by means of a link arm 26. Each arm 26 has a hole at each ends thereof whereby it is rotatably mounted on the shafts 4 of the rollers 20. The arm 26 which connects one roller of each pair is further connected by a similar arm to a third roller next to the pair, in a similar manner, except that the arm is mounted to the shafts 4 at a position offset from the first-mentioned arm. In this manner each roller is connected to its adjacent rollers all around the endless roller path 12. As a result the rollers may be made to move along the guides 8 even if only one roller is provided with a reaction plate 6.

A third embodiment of the invention is shown in Figures 5 and 6, which is similar in its general arrangement to the second embodiment. As in the first two embodiments, dough 11 is fed into the apparatus between a conveyor belt 25 and the rollers 20 on the bottom run of the endless roller path 12, and is stretched by the co-action of the conveyors and the rollers in a similar manner to the previous embodiments. What differs here is the drive mechanism. At least one motor 21 is fixedly mounted within one of the rollers 20 and an electric current is supplied to the motor from a distributor 32 through electrodes 22 and 24. The roller 20 with the motor is rotatably mounted on a shaft 23 (as are the other rollers) and is made to rotate by the driving force of the motor 21. The motor is provided with a shaft (not shown) which extends through the center of the motor to constitute a stator, and is rotatable relative to the rest of the motor which constitutes a rotor. The stator is fixed to the shaft 23, and the rotor is fixed to the roller 20, whereby the roller rotates about the shaft 23 when an electric current is supplied to the motor 21.

As in the second embodiment, arms 26 connect each pair of adjacent shafts 23. Thus, all the rollers 20 are spaced apart from each other by the length of an arm 26. Each arm 26 is connected to each shaft 23 in such a manner as to preclude free rotation of the shaft 23 about its axis, but care must be taken that the arm 26 can rotate sufficiently to permit its movement about the rounded ends of the guides 31. Because of the provision of the arms 26, if one roller progresses along the endless roller path, all of the other rollers are made to progress simultaneously. Furthermore the rollers can be rotated by the motor 21 around the shafts 23. A pair of wheel-shaped bearings 30 are fixedly mounted one on each end of each shaft 23, to contact oval-form guides 31 provided adjacent the ends of the shafts. The bearings 30 cause the shafts 23 to move around the guides 31. ·

A pair of friction wheels 27 may be fixedly mounted on each shaft 23, one on each side of the roller 20 thereon. A pair of rails 28 are mounted on the frame facing the friction wheels 27 and in frictional relationship therewith. This arrangement helps to cause the rotation of the rollers 20 about their axes to be changed, by the frictional engagement between the friction wheels 27 and the rails 28, into the movement of the rollers around the guides 31. For this reason it is advantageous to provide the rails and the friction wheels, but even without them the apparatus of this embodiment will still function, because the frictional contact of the rollers 20 with the dough 11, and the rotation of the rollers, causes the rollers to progress.

In the above described embodiments the speeds of the linear motor and the built-in motor are easily controlled in the usual manner, thereby achieving desired stretching effects. Although these embodiments of the invention have an oval path for the rollers, any other endless roller path, for instance a circular roller path, may be used instead.

Furthermore, although in the illustrated embodiments the plastic raw material to be stretched in plastic dough such as bread dough or confectionery dough, apparatus according to the present invention is in no way limited in its use to the stretching of such a food material, but may also be applied to the stretching of any other suitable material in other industries.

Stretching apparatus as described above obviates the need for a complex driving device as employed in the prior art dough stretching apparatus, so that the construction of the apparatus can be simplified. Also, since the apparatus has a plurality of its rollers provided with linear motors or built-in motors, which can be easily and reliably operated, stretching of the plastic raw material can be very easily controlled.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or any divisional application based thereon.

## Claims

1. Apparatus for stretching a plastic raw material, comprising a plurality of serially arranged conveyors (1, 2) and a plurality of rollers (3), movable around an endless roller path (12), positioned above the said conveyors (1, 2), characterized in that shafts (4) of the said rollers (3) are provided with movers (6) of a linear motor, and that a ring-form stator (7) of the linear motor extends, spaced apart by a predetermined distance from the said movers (6), along the said endless roller path (12).

2. Apparatus for stretching a plastic raw material, comprising a plurality of serially arranged conveyors (1, 2) and a plurality of rollers (3), movable around an endless roller path (12), positioned above the said conveyors (1, 2), characterized in that a shaft (4) of at least one of the rollers is provided with a mover (6) of a linear motor, a ring-form stator (7) of the linear motor extends, spaced apart by a predetermined distance from the mover (6), along the endless roller path (12), and connecting means (26) are provided which link the shafts (4) of the rollers (3) with each other in series.

3. Apparatus for stretching a plastic raw material, comprising a plurality of serially arranged conveyors (1, 2) and a plurality of rollers (20), movable around an endless roller path (12), positioned above the said conveyors (1, 2), characterized in that at least one of the rollers (20) is provided with a built-in motor (21) to cause the roller (20) to rotate about its axis and thereby progress along the endless roller path (12), and connecting means (26) are provided which link the shafts (4) of the rollers (20) with each other in series.

4. Apparatus as claimed in any preceding claim, further comprising rails (28) disposed in frictional contact with the said rollers (3, 20).

## Patentansprüche

1. Vorrichtung zum Dehnen eines plastischen Rohmaterials, umfassend eine Mehrzahl von in Serie angeordneten Förderern (1, 2) und eine Mehrzahl von Rollen (3), die rund um eine über diesen Förderern (1, 2) positionierte endlose Rollenbahn (12) bewegbar sind, dadurch gekennzeichnet, daß Achsen (4) dieser Rollen (3) mit Bewegungsvorrichtungen (6) eines Linearmotors versehen sind und daß ein ringförmiger Stator (7) des Linearmotors sich in einem vorbestimmten Abstand von den Bewegungseinrichtungen (6) entlang der endlosen Rollenbahn (12) erstreckt.

2. Vorrichtung zum Dehnen eines plastischen Rohmaterials, umfassend eine Mehrzahl von in Serie angeordneten Förderern (1, 2) und eine Mehrzahl von Rollen (3), die rund um eine über diesen Förderern (1, 2) positionierte endlose Rollenbahn (12) bewegbar sind, dadurch gekennzeichnet, daß eine Achse (4) zumindest einer Rolle mit einer Bewegungseinrichtung (6) eines Linearmotors versehen ist, ein ringförmiger Stator (7) des Linearmotors sich in einem vorbestimmten Abstand von der Bewegungseinrichtung entlang der endlosen Rollenbahn (12) erstreckt und Verbindungsmittel (26) vorgesehen sind, die die Achsen (4) der Rollen (3) miteinander in Serie verbinden.

3. Vorrichtung zum Dehnen eines plastischen Rohmaterials, umfassend eine Mehrzahl von in Serie angeordneten Förderern (1, 2) und eine Mehrzahl von Rollen (3), die rund um eine über diesen Förderern (1, 2) positionierte endlose Rollenbahn (12) bewegbar sind, dadurch gekennzeichnet, daß zumindest eine der Rollen (3) mit einem eingebauten Motor (21) versehen ist, um zu bewirken, daß sich die Rolle (3) um ihre Achse dreht und sich dadurch entlang der endlosen Rollenbahn (12) fortbewegt, und daß Verbindungsmittel (26) vorgesehen sind, die die Achsen (4) der Rollen (3) miteinander in Serie verbinden.

4. Vorrichtung, wie in einem vorhergehenden Anspruch beansprucht, weiter umfassend Schienen (28), die in Reibungskontakt mit diesen Rollen (3) angeordnet sind.

### Revendications

1. Appareil pour étirer une matière crue plastique, comprenant plusieurs transporteurs (42) agencés en série et plusieurs rouleaux (3) mobiles le long d'un circuit fermé (12) de rouleaux, disposé au-dessus desdits transporteurs (1, 2), caractérisé en ce que des arbres (4) desdits rouleaux (3) sont munis de pièces mobiles (6) d'un moteur linéaire, et en ce qu'un stator (7) de forme annulaire du moteur linéaire s'étend, espacé d'une distance prédéterminée desdites pièces mobiles (6), le long dudit circuit fermé (12) des rouleaux.

2. Appareil pour étirer une matière crue plastique, comprenant plusieurs transporteurs (1, 2) agencés en série et plusieurs rouleaux (3), mobiles le long d'un circuit fermé (12) de rouleaux, positionnés au-dessus desdits transporteurs (1, 2), caractérisé en ce qu'un arbre (4) d'au moins l'un des rouleaux est muni d'une pièce (6) d'un moteur linéaire, un stator (7) en forme d'anneau du moteur linéaire s'étend, espacé d'une distance prédéterminée de la pièce mobile (6), le long du circuit fermé (12) de rouleaux, et il est prévu des moyens (26) de liaison qui relient les arbres (4) des rouleaux (3) les uns aux autres, en série.

3. Appareil pour étirer une matière crue plastique, comprenant plusieurs transporteurs (1, 2) agencés en série et plusieurs rouleaux (3) mobiles de long d'un circuit fermé (12) de rouleaux, disposés au-dessus desdits transporteurs (1, 2) caractérisé en ce qu'au moins l'un des rouleaux (3) est muni d'un moteur incorporé (21) pour faire tourner le rouleau (3) sur son axe et le faire ainsi progresser le long du circuit fermé (12) de rouleaux, et il est prévu des moyens de liaison (26) qui relient les arbres (4) des rouleaux (3) les uns aux autres en série.

4. Appareil selon l'une quelconque des revendications précédentes, comprenant en outre des rails (28) disposés en contact de frottement avec lesdits rouleaux (3).

0 172 752

FIG. 1

FIG. 2

FIG. 3

1

# FIG. 4

# FIG. 5

# FIG. 6